# FASCICULE DE BREVET EUROPEEN

(11) **EP 2 008 149 B1**
(45) Date de publication et mention de la délivrance du brevet: **04.05.2022**
(21) Numéro de dépôt: 07731097.7
(22) Date de dépôt: 06.03.2007
(51) Int. Cl.: G02C 13/00, G02C 7/02

(54) **PROCEDE DE DETECTION D'UN REFERENTIEL OPTIQUE D'UNE LENTILLE OPHTALMIQUE**
VERFAHREN ZUM DETEKTIEREN EINES OPTISCHEN KOORDINATENSYSTEMS FÜR EINE OPTISCHE LINSE
METHOD FOR DETECTING AN OPTICAL COORDINATE SYSTEM FOR AN OPHTHALMIC LENS

(30) Priorité: 20.04.2006 FR 0603490
(43) Date de publication de la demande: 31.12.2008
(73) Titulaire: Essilor International, 94220 Charenton-le-Pont (FR)
(72) Inventeur: DIVO, Fabien, 94227 Charenton (FR)
(74) Mandataire: Jacobacci Coralis Harle
(86) Numéro de dépôt international: PCT/FR2007/000398
(87) Numéro de publication internationale: WO 2007/122304

(56) Documents cités:
- EP-A2- 1 149 664
- WO-A-99/06225
- WO-A-2005/092571
- FR-A1- 2 853 734
- US-A1- 2004 046 960

## Description

### DOMAINE TECHNIQUE AUQUEL SE RAPPORTE L'INVENTION

La présente invention concerne de manière générale le domaine de la lunetterie et plus précisément le montage des lentilles ophtalmiques d'une paire de lunettes correctrices sur une monture.

Elle concerne plus particulièrement un procédé de détection de la position d'au moins un point remarquable recherché d'une lentille ophtalmique pourvue de marquages provisoires matérialisant des points remarquables de cette lentille.

L'invention trouve une application particulièrement avantageuse dans la détection de positions de points remarquables d'une lentille ophtalmique à variation progressive de puissance.

### ARRIÈRE-PLAN TECHNOLOGIQUE

La partie technique du métier de l'opticien consiste à monter une paire de lentilles ophtalmiques correctrices sur la monture sélectionnée par le porteur. Ce montage se décompose en deux opérations principales :
- le centrage de chaque lentille qui consiste à positionner et orienter convenablement la lentille en regard de l'œil du futur porteur, puis
- le détourage de chaque lentille qui consiste à usiner ou découper son contour à la forme souhaitée, compte tenu des paramètres de centrage définis.

Dans le cadre de la présente invention, on s'intéresse à la première opération dite de centrage. Il s'agit concrètement pour l'opticien de définir la position que devra occuper, sur la lentille, le contour final selon lequel cette dernière devra être détourée. L'objectif de cette opération est qu'une fois montée sur la monture sélectionnée, la lentille soit convenablement positionnée en regard de la pupille de l'œil du porteur pour exercer au mieux la fonction optique de correction de la vue pour laquelle elle a été conçue. Pour cela, l'opticien se réfère au référentiel optique de la lentille défini typiquement par des points remarquables tels que, pour une lentille ophtalmique à variation progressive de puissance, le point de centrage de la lentille, son trait d'axe, et ses points de vision de près et de loin.

Lors de sa fabrication, toute lentille ophtalmique à variation progressive de puissance est munie de différents types de marquages matérialisant ces points remarquables, à savoir des marquages provisoires peints sur la lentille et des marquages permanents gravés sur la lentille. Les marquages provisoires permettent un centrage commode de la lentille préalablement à son montage. Les marquages permanents permettent d'identifier la nature et les caractéristiques de la lentille ophtalmique, ainsi que de vérifier ou de rétablir, après effacement des marquages provisoires, le repérage exact de ladite lentille. On comprend en effet que les marquages provisoires seront effacés par l'opticien avant la remise des lunettes au porteur et ils pourront, au besoin, être rétablis à partir des marquages permanents gravés qui restent sur la lentille.

Typiquement, l'opticien situe tout d'abord sur la lentille ophtalmique ses marquages provisoires en acquérant une image de la lentille ophtalmique et en la traitant à l'aide d'un logiciel de reconnaissance d'image ad hoc. Il détermine ainsi la position des marquages provisoires de la lentille, à savoir une croix qui situe la position du point de centrage à positionner en regard de la pupille de l'œil du porteur, deux traits d'axe horizontal qui permettent de repérer la position angulaire de la lentille autour du point de centrage, et enfin deux cercles qui situent la position des points de vision de loin et de vision de près de la lentille ophtalmique. Il peut alors simuler le positionnement de la lentille sur la monture et positionner son contour final pour vérifier la validité du montage en s'assurant en particulier que les zones de vision de près et de loin sont bien situées à l'intérieur du contour final, faute de quoi la correction du porteur ne sera pas satisfaisante.

L'inconvénient principal d'un tel procédé de détection est qu'il ne peut être mis en œuvre qu'à deux conditions. La première condition est qu'aucun des marquages provisoires ne soit effacé si bien que les marquages visibles sur la lentille matérialisent l'ensemble des points caractéristiques de la lentille. En effet, si les marquages provisoires sont en partie effacés, il est alors nécessaire pour déterminer le référentiel optique de la lentille d'avoir recours aux micro-gravures ou d'effectuer un centrage manuel. La seconde condition concerne la forme des différents marquages. Selon ce procédé, il est en effet nécessaire que les formes des différents marquages soient reconnue par le logiciel de traitement d'image : le point de centrage est marqué par une croix, l'axe par des traits, et les points de vision de près et de loin par des cercles.

On comprend alors que seules les lentilles dont les marquages sont connus et parfaitement en état d'être lus peuvent être traitées par le logiciel de traitement d'image.

Un autre procédé de détection consiste à acquérir une image de la lentille ophtalmique avec ses marquages permanents, à rechercher dans un registre à quel type référencé de lentilles ophtalmiques ces marquages permanents correspondent, et à en déduire la position des points remarquables de la lentille ophtalmique.

L'inconvénient principal de cet autre procédé de détection est que plusieurs types référencés de lentilles ophtalmiques peuvent comporter des marquages permanents semblables voire identiques, si bien qu'il n'est pas possible de déduire de manière certaine la position des points remarquables de la lentille. Par ailleurs, la mise en œuvre de cet autre procédé nécessite l'utilisation d'un appareil d'acquisition d'images spécifiquement adapté à faire apparaître les micro-gravures de la lentille, quel que soit le matériau de cette dernière. En outre, ces micro-gravures ne sont pas toujours complètement visibles, ce qui engendre des erreurs dans la détection des points remarquables de la lentille. Ces micro-gravures peuvent aussi être confondues par erreur de reconnaissance d'image avec des poussières, salissures ou défauts affectant la surface de la lentille. Enfin, l'utilisation des micro-gravures ne permet pas à l'opticien, d'une part, de savoir si la lentille est destinée à être disposée en face de l'œil droit ou de l'œil gauche du porteur, et, d'autre part, de déterminer quel est le haut et le bas de la lentille. De plus, ce procédé est inadapté au traitement des lentilles dépourvues de micro-gravures.

### OBJET DE L'INVENTION

Afin de remédier aux inconvénients précités de l'état de la technique, la présente invention propose un procédé de détection permettant de détecter de façon fiable les positions des points remarquables de la lentille ophtalmique même si ses marquages provisoires sont partiellement effacés ou si la lentille présente des salissures ou impuretés. Un autre but de l'invention est de proposer un procédé de détection opérant quelle que soit la forme des marquages provisoires ou permanents, propre à tel ou tel fabriquant. Un autre but de l'invention est de proposer un procédé de détection opérant avec des marquages permanents déficients ou même sans avoir nécessairement recours aux marquages permanents.

Plus particulièrement, on propose selon l'invention un procédé de détection tel que défini dans la revendication 1.

Chaque fabricant de lentilles ophtalmiques utilise des marquages provisoires qui présentent des positions et des formes propres à chacune des marques de lentilles qu'il commercialise. Il existe par conséquent un grand nombre de types de marquages provisoires.

Les marquages provisoires disposés aux sommets des lentilles ophtalmiques sont souvent estompés ou effacés du fait du frottement des lentilles contre les parois des étuis ou des boîtes de protection dans lesquels elles sont livrées aux opticiens.

Selon l'invention, on référence dans un registre des données représentatives de l'agencement des marquages provisoires d'un nombre important de types de lentilles ophtalmiques puis, lors de la mise en oeuvre du procédé, on compare ces données avec l'image acquise de la lentille afin de déterminer à quel type de lentilles correspond la lentille ophtalmique. Une fois ce type de lentilles déterminé, on détermine la position des points remarquables de la lentille ophtalmique grâce aux données enregistrées dans l'enregistrement correspondant du registre.

Grâce à l'invention, quelle que soit la forme géométrique des marquages provisoires de la lentille ophtalmique, si une partie de ces marquages provisoires est effacée, il est possible de comparer l'image acquise de la lentille avec les données en mémoire dans les enregistrements du registre afin de déterminer à quel enregistrement correspondent le mieux les marquages provisoires de la lentille, ce qui permet de déterminer avec précision les positions des marquages de la lentille ophtalmique.

Pour trouver l'enregistrement correspondant, plusieurs techniques peuvent être mises en œuvre. Parmi ces techniques, il est possible d'avoir recours au barycentre géométrique des marquages de l'image acquise de la lentille et au barycentre géométrique des marquages de chaque enregistrement lu du registre, en les superposant puis en déterminant si les marquages de l'enregistrement lu sont superposés aux marquages de l'image acquise. Si c'est le cas, l'enregistrement lu constitue l'enregistrement correspondant, sinon, on procède à la lecture d'un autre enregistrement du registre.

Le registre peut être mis à jour par l'opticien lui même. En effet, ce dernier utilise des lentilles fabriquées par un nombre restreint de fabricants, si bien qu'il est confronté à un nombre restreint de types de marquages. Le nombre d'enregistrements de son registre se limite ainsi au nombre de types de marquages qu'il est amené à détecter. La recherche de l'enregistrement correspondant dans le registre est ainsi rendue plus rapide.

Selon une première caractéristique avantageuse du procédé de détection conforme à l'invention, pour rechercher l'enregistrement correspondant, on détermine, pour chaque enregistrement lu du registre, un niveau de correspondance entre l'agencement des marquages provisoires de cet enregistrement lu et l'agencement de tous les marquages provisoires de la lentille ophtalmique dont l'image a été acquise.

On comprend en particulier que si une partie des marquages de la lentille ophtalmique est effacée, le niveau de correspondance de l'ensemble des enregistrements du registre diminue mais celui de l'enregistrement correspondant conserve une très forte probabilité d'être le plus élevé.

Selon un premier mode de réalisation du procédé de détection conforme à l'invention, pour rechercher l'enregistrement correspondant, on sélectionne l'enregistrement pour lequel le niveau de correspondance est le plus élevé.

Ainsi, selon ce premier mode, on procède au calcul des niveaux de correspondance entre l'agencement des marquages provisoires de chacun des enregistrements du registre et l'agencement des marquages provisoires de la lentille ophtalmique, puis, on sélectionne l'enregistrement correspondant en étant certain que l'agencement de ses marquages est l'agencement qui correspond le mieux à l'agencement des marquages provisoires de la lentille ophtalmique. Eventuellement, si le degré de correspondance le plus élevé reste inférieur à une valeur seuil prédéterminée, on peut déduire que la lentille ophtalmique appartient à un type non référencé de lentilles, puis on peut procéder à la mise à jour du registre en y ajoutant ce nouveau type de lentilles.

Avantageusement selon ce premier mode, pour rechercher l'enregistrement correspondant, on fait correspondre un nombre restreint de données représentatives de l'agencement des marquages provisoires de chaque enregistrement avec les marquages provisoires de la lentille ophtalmique, on en déduit un ensemble d'enregistrements dont l'agencement des marquages provisoires correspondent aux marquages provisoires de la lentille ophtalmique avec un niveau de correspondance probant, puis on fait correspondre au mieux l'ensemble des données représentatives de l'agencement des marquages provisoires de chaque enregistrement dudit ensemble d'enregistrements avec les marquages provisoires de la lentille ophtalmique pour en déduire l'enregistrement pour lequel le niveau de correspondance est le plus élevé.

Ainsi, le procédé étant mis en oeuvre par un logiciel de traitement adapté, la mise en correspondance par un nombre restreint de données représentatives de l'agencement des marquages provisoires de chaque enregistrement permet de diminuer le temps global des calculs réalisés par le logiciel de traitement. La sélection d'un ensemble d'enregistrements puis la mise en correspondance de l'ensemble des données représentatives de l'agencement des marquages provisoires de chaque enregistrement dudit ensemble d'enregistrements permet ensuite de trouver rapidement parmi cet ensemble l'enregistrement correspondant, sans pour autant diminuer la précision du procédé.

L'ensemble d'enregistrements sélectionnés peut pour cela comprendre un nombre d'enregistrements fonction du résultat de la mise en correspondance du nombre restreint de données. Plus précisément, il peut comprendre un grand nombre d'enregistrements si ce résultat fournit de nombreux enregistrements dont l'agencement des marquages correspond globalement à l'agencement des marquages provisoires de la lentille. Il peut au contraire comprendre un nombre très restreint d'enregistrements si ce résultat fourni peu d'enregistrements dont l'agencement des marquages correspond globalement à l'agencement des marquages provisoires de la lentille.

Selon un deuxième mode de réalisation du procédé selon l'invention, pour rechercher l'enregistrement correspondant, on sélectionne l'enregistrement pour lequel le niveau de correspondance est supérieur à un seuil prédéfini.

Ainsi, selon ce deuxième mode, le logiciel de traitement réalise un calcul précis du niveau de corrélation entre l'agencement des marquages provisoires des enregistrements successivement lus du registre et l'agencement des marquages provisoires de la lentille ophtalmique, puis, dès qu'il détecte un enregistrement pour lequel le niveau de corrélation est supérieur à un seuil prédéfini, il arrête la lecture du registre et sélectionne l'enregistrement lu. Le temps de recherche de l'enregistrement correspondant dépend donc de sa place dans le registre. Il est alors possible d'optimiser la durée du calcul en classant les types référencés de lentilles ophtalmiques selon leur probabilité d'occurrence. Ce classement peut être personnalisé en adaptant ce classement à l'activité effective de l'opticien. On pourra typiquement classer au début du registre les types de lentilles le plus couramment utilisés.

Avantageusement, le niveau de correspondance entre l'agencement des marquages provisoires du masque de l'enregistrement lu du registre et l'agencement des marquages provisoires de la lentille ophtalmique dont l'image a été acquise est déduit en fonction de la correspondance entre la position de tout ou partie des marquages provisoires du masque et la position de tout ou partie des marquages provisoires de la lentille ophtalmique dont l'image a été acquise.

Ainsi est-il possible de déterminer, après avoir fait coïncider au mieux les marquages du masque avec les marquages de l'image acquise, les distances qui séparent les marquages du masque des marquages correspondant de l'image acquise. Une valeur moyenne de ces distances peut ainsi permettre de calculer le niveau de correspondance.

Avantageusement, le niveau de correspondance entre l'agencement des marquages provisoires du masque de l'enregistrement lu du registre et l'agencement des marquages provisoires de la lentille ophtalmique dont l'image a été acquise est déduit en fonction de la correspondance entre la forme de tout ou partie des marquages provisoires du masque et la forme de tout ou partie des marquages provisoires de la lentille ophtalmique dont l'image a été acquise.

Ainsi, est-il également possible de comparer les formes des marquages de l'image acquise et celles des marquages du masque afin de calculer le niveau de correspondance. En effet, comparer les formes des marquages permet de sélectionner parmi les enregistrements du registre uniquement les enregistrements correspondant à des types référencés de lentilles réalisées par le fabricant qui a réalisé la lentille ophtalmique lue.

Avantageusement, lesdites données représentatives de l'agencement des marquages provisoires de chaque enregistrement du registre comportent un masque pourvu desdits marquages provisoires. Pour calculer ledit niveau de correspondance :
- on superpose le masque de chaque enregistrement successivement lu du registre avec l'image acquise des marquages provisoires de la lentille ophtalmique,
- on fait coïncider au mieux l'ensemble des marquages provisoires du masque avec l'ensemble des marquages provisoires de l'image acquise,
- on calcule le niveau de correspondance entre l'agencement des marquages provisoires du masque de l'enregistrement lu du registre et l'agencement des marquages provisoires de l'image acquise de la lentille ophtalmique.

Les marquages des enregistrements du registre sont donc enregistrés sous forme de masques, c'est-à-dire d'images de référence transparentes pouvant être superposées à l'image acquise de la lentille ophtalmique pour la reconnaissance globale des formes et des positions des marquages provisoires.

Pour faire coïncider au mieux les marquages provisoires du masque avec les marquages provisoires de l'image acquise, il suffit de déplacer le masque sur l'image acquise afin de trouver la position dans laquelle le masque se superpose au mieux avec l'image acquise, de manière à déterminer si l'enregistrement lu constitue l'enregistrement correspondant. Pour calculer le niveau de correspondance, on peut déterminer dans plusieurs positions du masque par rapport à l'image acquise le nombre de points des marquages du masque superposés avec des points des marquages de l'image acquise, puis on peut sélectionner la position dans laquelle le nombre de ces points superposés est maximum, et enfin on peut calculer le taux de points des marquages du masque superposés avec des points des marquages de l'image acquise.

Avantageusement alors, le niveau de correspondance calcule est un niveau de corrélation entre l'agencement des marquages provisoires du masque de l'enregistrement lu du registre et l'agencement des marquages provisoires de l'image acquise de la lentille ophtalmique.

Selon une autre caractéristique avantageuse du procédé selon l'invention, pour faire coïncider l'ensemble des marquages provisoires du masque avec l'ensemble des marquages provisoires de l'image acquise, on translate et on fait pivoter dans le plan de l'image acquise le masque relativement à l'image acquise pour qu'il prenne différentes positions.

Avantageusement, on acquiert l'image de la lentille ophtalmique de manière à faire apparaître des micro-gravures de la lentille ophtalmique, on détermine la position de zones de recherche des micro-gravures en fonction de la mise en correspondance des marquages provisoires de la lentille ophtalmique et des données représentatives de l'agencement des marquages provisoires du type référencé de lentilles ophtalmiques de l'enregistrement correspondant, et on détermine la position dudit au moins un point remarquable recherché en recherchant les positions desdites micro-gravures dans lesdites zones de recherche.

Les micro-gravures sont généralement positionnées sur la lentille ophtalmique avec une plus grande précision que les marquages provisoires. Pour déterminer avec précision la position des points remarquables de la lentille, le procédé se propose donc de déterminer dans un premier temps, à l'aide des marquages provisoires, des zones restreintes dans lesquelles sont positionnées les micro-gravures, puis dans un deuxième temps, de déterminer la position des micro-gravures, avant enfin, dans un troisième temps, d'en déduire la position précise des point remarquables. Ces zones de recherche permettent ainsi, d'une part, de diminuer la durée nécessaire à la recherche des micro-gravures sur l'image acquise de la lentille, et, d'autre part, d'éviter de confondre des saletés présentes sur l'image avec des micro-gravures dans la mesure où la probabilité que ces saletés se trouvent dans lesdites zones de recherche est faible.

Avantageusement, l'acquisition de l'image de la lentille ophtalmique comporte une étape de prise d'une image brute de la lentille ophtalmique, une étape de binarisation de l'image brute de la lentille ophtalmique, et une étape de compensation des effets optiques induits par la lentille ophtalmique.

Selon une autre caractéristique avantageuse du procédé selon l'invention, l'étape de détermination est réalisée par lecture, dans l'enregistrement correspondant du registre, de données représentatives de l'agencement des points remarquables du type référencé de lentilles ophtalmiques par rapport à l'agencement des marquages provisoires.

Chaque enregistrement du registre comporte des données relatives à la position exacte des points remarquables par rapport à la position des marquages provisoires en mémoire dans le registre. Ainsi, pour déterminer la position des points remarquables de la lentille, le logiciel de traitement procède à la mise en correspondance du référentiel des marquages de l'enregistrement correspondant avec le référentiel des marquages de la lentille, puis détermine la position des points remarquables de la lentille en lisant directement leurs positions dans l'enregistrement correspondant du registre.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de dessus d'une lentille ophtalmique à addition progressive de puissance pourvue de ses marquages provisoires et permanents ;
- la figure 2 est une vue générale en perspective d'un dispositif centreur-bloqueur ;
- la figure 3 est un schéma optique du dispositif de la figure 2 ; et
- la figure 4 est une vue schématique de dessus d'une image acquise de la lentille ophtalmique de la figure 1 superposée à un masque pourvu de marquages.

L'objectif du procédé de détection selon l'invention est de déterminer les positions de points remarquables d'une lentille ophtalmique 10 à variation progressive de puissance que sont son point de centrage optique CO, son point de vision de près VP et son point de vision de loin VL. Ces points définissent en effet un référentiel optique de la lentille qui permet par la suite à un opticien de convenablement la centrer en regard d'une pupille d'un oeil d'un porteur, de manière à ce qu'elle exerce au mieux les fonctions optiques de correction de la vue du porteur pour lesquelles elle a été conçue.

Pour déterminer les positions de ces points remarquables CO, VP, VL, on se réfère selon l'invention aux marquages provisoires que comporte la lentille lorsqu'elle est fournie à l'opticien. En effet, lors de sa fabrication, toute lentille ophtalmique à variation progressive de puissance est munie de différents types de marquages matérialisant ces points remarquables CO, VP, VL, à savoir des marquages provisoires peints sur la lentille et des marquages permanents gravés sur la lentille. Les marquages provisoires permettent un repérage commode de la lentille préalablement à son montage sur une monture de lunettes. Les marquages permanents permettent d'identifier la nature et les caractéristiques de la lentille ophtalmique, ainsi que de vérifier ou de rétablir, après effacement des marquages provisoires, le repérage exact de ladite lentille.

Ces marquages provisoires et permanents présentent des positions et des formes qui ne sont généralement communes qu'aux lentilles de la même marque, fabriquées par le même fabricant.

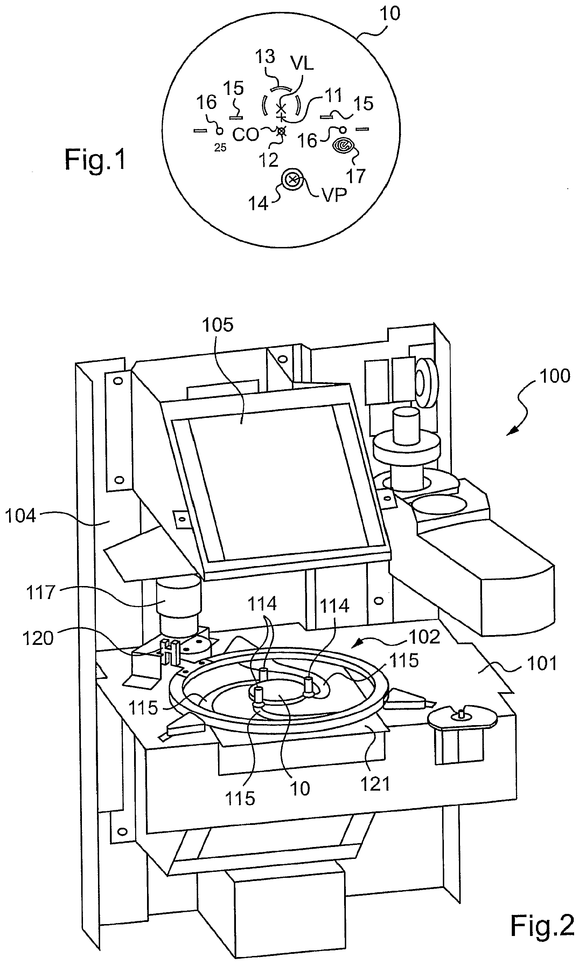

Plus précisément, comme le montre la figure 1, les marquages provisoires comprennent, par exemple pour une marque de lentilles de la demanderesse :
- une croix 11 dite de montage ou centrage, matérialisant le centre de la zone de vision de loin destinée à être positionnée au centre de la pupille du porteur quand celui-ci regarde à l'infini droit devant lui ; elle permet de positionner en hauteur la progression de puissance de la lentille ophtalmique 10 par rapport à l'œil, de telle sorte que le porteur trouve facilement, comme prévu par le concepteur de la lentille, la puissance correctrice dont il a besoin en vision de loin, en vision intermédiaire et en vision de près ;
- un point central 12 situé, selon les types de lentilles, de 2 à 6 mm au-dessous de la croix de montage 11 et qui localise le "point de centrage optique" CO de la lentille 10 ; ce point de centrage optique est conventionnellement, pour une lentille progressive, le point de «référence prisme » où est mesurée la puissance prismatique nominale de la lentille ophtalmique 10 correspondant à la prescription du porteur ;

- un cercle 13 de mesure de la puissance de vision de loin de la lentille, situé dans la partie supérieure de la lentille ophtalmique 10, juste au-dessus de la croix de montage 11, et qui localise le point de vision de loin VL ; il s'agit donc du lieu où un frontofocomètre devra être placé pour mesurer la puissance de vision de loin de la lentille ophtalmique 10;
- un cercle 14 de mesure de la puissance de vision de près de la lentille, situé dans la partie inférieure de la lentille ophtalmique 10 et qui entoure le point de vision de près VP ; ce point est décentré du côté nasal de 2 à 3 mm et la distance qui le sépare de la croix de montage 11 constitue la longueur nominale de la progression de la lentille ophtalmique 10 ;
- un ou plusieurs traits 15 repérant l'horizontale de la lentille ophtalmique 10.

Eventuellement, un ou plusieurs de ces marquages provisoires 11, 12, 13, 14, 15 peuvent avoir été effacés lorsque la lentille ophtalmique 10 est fournie à l'opticien. C'est souvent le cas des marquages situés au sommet de la lentille puisqu'ils sont amenés à frotter contre la pochette de protection qui contient ladite lentille.

Comme le montre également la figure 1, les marquages permanents comprennent généralement quant à eux :
- deux petits cercles ou signes 16 localisés sur l'horizontale de la lentille ophtalmique 10 passant par le point de centrage optique CO et situés à 17 mm de part et d'autre du point central 12 ; ces gravures permettent de retrouver le centrage horizontal et vertical de la lentille ;
- un signe 17 permettant d'identifier la marque et le fabricant de la lentille ophtalmique 10 ;
- un nombre à 2 ou 3 chiffres représentant la valeur de l'addition (par exemple 25 pour une addition de 2,50 dioptries) qui est gravé sous un des petits cercles 16.

La mise en oeuvre du procédé trouve une application particulièrement avantageuse par l'implémentation, dans un logiciel intégré à dispositif centreur-bloqueur 100 pourvu d'une unité de traitement et d'un écran de contrôle, d'un programme apte à exécuter les étapes du procédé de détection décrit.

Le procédé de détection des positions des points remarquables CO, VP, VL comporte une première étape d'acquisition d'une image 20 des marquages provisoires 11, 12, 13, 14, 15 de la lentille ophtalmique 10.

Pour la mise en œuvre de cette étape, en référence à la figure 2, on dispose la lentille ophtalmique 10 dans le dispositif centreur-bloqueur 100.

Ce dispositif comporte un pupitre de travail 101 sur lequel est disposé un mécanisme de centrage 102 de la lentille ophtalmique 10. Le mécanisme de centrage 102 du pupitre de travail 101 comporte ici un jeu de trois mors 114 à serrage concentrique portés par des bras 115 pivotant agencés de manière que leur rotation conjointe permet le rapprochement des trois mors 114. Le serrage des mors 114 est commandé par un moteur 117. Une cellule 120, optique ou électromagnétique, permet au moteur 117 de connaître la position des bras 115 et donc de la lentille ophtalmique 10 par rapport au bâti 104. L'ensemble formé par les bras 115 et par les mors 114 est disposé au-dessus d'une plaque support transparente 121.

Le dispositif centreur-bloqueur 100 comporte en outre un écran de visualisation 105 fixé sur le bâti 104 du dispositif de manière à être orienté pour être visible de l'utilisateur travaillant au pupitre de travail 101.

Le dispositif centreur-bloqueur 100 est adapté à détecter et afficher l'agencement précis des marquages provisoires 11, 12, 13, 14, 15 de la lentille ophtalmique 10.

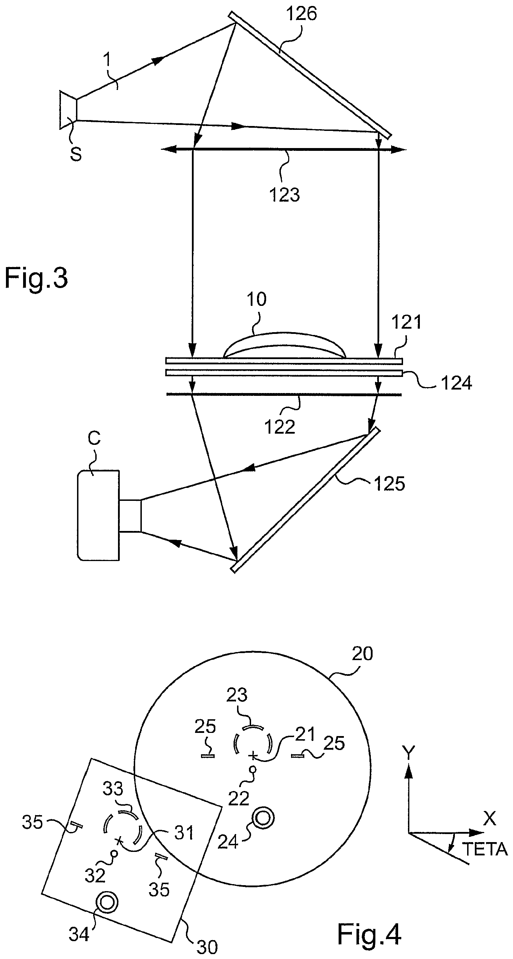

Pour cela, comme le montre schématiquement la figure 3, il comprend :
- un moyen d'accueil de la lentille ophtalmique 10 constitué ici par la plaque support 121 transparente à la lumière,
- de part et d'autre dudit moyen d'accueil, d'une part, des moyens d'éclairement de la lentille ophtalmique 10 installée sur ledit moyen d'accueil, et, d'autre part, des moyens d'acquisition d'une image brute de la lentille ophtalmique 10 ou, ce qui revient au même, de la lumière transmise par ladite lentille ophtalmique 10 - on comprend ici que cette image brute est déformée du fait des puissances optiques de la lentille -
- des moyens de mesure S, 122, 124, C aptes à mesurer le pouvoir de déviation optique qu'exerce la lentille ophtalmique 10 sur au moins un rayon lumineux et à délivrer un signal représentatif de ce pouvoir de déviation,
- un système électronique et informatique (non visible), tel qu'un microordinateur ou un circuit intégré dédié (ASIC), comprenant des instructions de calcul de correction géométrique déduisant dudit pouvoir de déviation mesuré une image compensée de la lentille ophtalmique 10 perçue par les moyens d'acquisition 122, 125, C.

Selon l'exemple représenté, les moyens d'éclairement comprennent une source de lumière S qui émet un faisceau lumineux divergent en direction d'un miroir 126 incliné à 45 degrés et une lentille convergente 123 adaptée à former un flux lumineux à rayons parallèles en direction de la lentille ophtalmique 10.

Les moyens d'acquisition comprennent une plaque dépolie 122 formant écran de projection et une caméra numérique C captant l'image de cet écran du côté opposé à la lentille 10. La caméra C délivre au système électronique et informatique un signal représentatif de l'image brute projetée sur l'écran de projection 122. Ils comprennent pour cela, entre le support transparent 124 et la caméra numérique C, un système optique de renvoi du faisceau lumineux transmis par la lentille ophtalmique 10 comportant un miroir 125 incliné à 45 degrés. La caméra numérique C recueille, via le renvoi angulaire optique opéré par le miroir incliné 125, les images ou ombres projetées sur l'écran de projection dépoli 122.

Le système électronique et informatique intègre des moyens de traitement d'image (sous la forme d'un programme d'ordinateur ou d'un ASIC) adaptés à traiter le signal obtenu en sortie de la caméra numérique C. Ces moyens de traitement d'image binarisent l'image brute de manière à ce que l'ensemble des points de l'image de la lentille soit codé de manière binaire, en noir et blanc. Ainsi, les points de l'image acquise des parties vierges de la lentille sont tous codés par des "0", tandis que les points correspondant à des points de la lentille sur lesquels sont peints des marquages provisoires sont codés par des "1".

L'image binarisée est ensuite compensée au moyen du calcul de correction géométrique, puis cette image acquise 20 (pourvue des images 21, 22, 23, 24, 25 des marquages provisoires 11, 12, 13, 14, 15) est transmise à des moyens d'affichage constitués en l'espèce par l'écran de visualisation 105.

Le système électronique et informatique est ici avantageusement pourvu d'un registre dont chaque enregistrement comprend, d'une part, des données représentatives de l'agencement des marquages provisoires d'un type référencé de lentilles ophtalmiques, et, d'autre part, des données représentatives des positions des points remarquables des lentilles du type référencé par rapport aux positions des marquages provisoires. Chaque type référencé de lentilles ophtalmiques, et par conséquent chaque enregistrement du registre, correspond ici à une marque de lentilles d'un fabricant donné.

Plus précisément, comme le montre la figure 4, lesdites données représentatives de l'agencement des marquages provisoires de chaque enregistrement comprennent un masque 30 pourvu des marquages provisoires 31, 32, 33, 34, 35 communs à toutes les lentilles du type référencé.

Le procédé de détection des positions des points remarquables CO, VP, VL comporte une deuxième étape de lecture du registre au cours de laquelle on recherche un enregistrement correspondant dont l'agencement des marquages provisoires 31, 32, 33, 34, 35 correspond avec un certain degré de correspondance à l'agencement des marquages provisoires 11, 12, 13, 14, 15 de la lentille ophtalmique 10 dont l'image 20 a été acquise.

Pour réaliser cette recherche, le programme informatique superpose virtuellement le masque 30 de chaque enregistrement lu du registre avec l'image acquise 20 dans un plan de superposition correspondant au plan de l'image acquise.

Il procède ensuite, dans une première position X, Y du masque 30 par rapport à l'image acquise 20, à la recherche d'un premier niveau de corrélation approché entre l'agencement des marquages provisoires 31, 32, 33, 34, 35 du masque 30 et l'agencement des images 21, 22, 23, 24, 25 des marquages provisoires 11, 12, 13, 14, 15 de la lentille ophtalmique 10. Pour ce faire, il sélectionne plusieurs points des marquages provisoires 31, 32, 33, 34, 35 du masque 30, ici au nombre de sept, puis il détermine dans cette première position le nombre de points parmi ces sept points qui sont superposés à un point de l'image acquise 20 codé par un 1 (c'est-à-dire correspondant à un point de la lentille sur lequel est peint un marquage provisoire). Ce nombre constitue le niveau de corrélation approché du masque 30 dans cette première position. Il est donc ici copris entre 0 et 7.

Le programme informatique fait ensuite pivoter le masque 30 dans le plan de superposition d'un angle TETA, par exemple égal à 10 degrés, puis il détermine un deuxième niveau de corrélation approché. Il réitère cette opération jusqu'à ce que le masque 30 ait réalisé une révolution complète, en déterminant pour chaque position angulaire du masque 30 un niveau de corrélation approché.

Il translate ensuite le masque 30 dans une autre position X, Y par rapport à l'image acquise 20 afin de déterminer d'autres niveaux de corrélation approchés pour chaque position angulaire du masque 30.

Après avoir translaté pas à pas le masque sur un échantillonnage important de points de l'image acquise 20, il sélectionne parmi l'ensemble des niveaux de corrélation approchés trouvés celui le plus élevé. Il affecte alors à l'enregistrement lu du registre ce niveau de corrélation approché.

Le programme informatique recommence cette opération pour chacun des masques 30 en mémoire dans les enregistrements du registre.

Il sélectionne alors un ensemble d'enregistrements dont les masques présentent des niveaux de corrélation approchés maximum. Plus précisément, si aucun des marquages provisoires de la lentille ophtalmique 10 n'a été effacé, il sélectionne les enregistrements dont les masques 30 présentent des niveaux de corrélation égaux à sept. En revanche, si aucun des masques ne présente un niveau de corrélation égal à sept, ce qui signifie qu'une partie des marquages provisoires a été effacée, il sélectionne les enregistrements dont les masques présentent des niveaux de corrélation égaux à six. Si aucun des masques ne présente un niveau de corrélation égal à six, il décrémente à nouveau la valeur du niveau de corrélation approché jusqu'à sélectionner au moins un enregistrement.

Le programme informatique procède alors à la détermination du niveau de corrélation réel, c'est-à-dire affiné, des masques 30 des enregistrements sélectionnés.

Dans ce dessein, le programme réitère les opérations de déplacement de chaque masque dans le plan de superposition. Cependant, le programme informatique ne considère, pour calculer les niveaux de corrélation, non plus sept points des marquages 31, 32, 33, 34, 35 du masque 30, mais l'ensemble des points des marquages du masque. Par ailleurs, il fait cette fois pivoter le masque degré par degré et il le déplace entre chacune de ses positions X, Y avec un pas plus fin. Il peut ainsi comparer avec précision les positions et les formes des marquages des masques 30 des enregistrements sélectionnés avec les formes et les positions des marquages de la lentille ophtalmique 10.

Ayant déterminé les niveaux de corrélation réels des masques 30 des enregistrements sélectionnés, le programme détermine l'enregistrement correspondant en sélectionnant l'enregistrement qui comporte le niveau de corrélation réel le plus grand. Cette sélection permet de déterminer l'enregistrement dont les marquages du masque 30 correspondent aux marquages de la lentille ophtalmique 10.

Eventuellement, si le niveau de corrélation réel du masque de l'enregistrement correspondant est inférieur à une valeur seuil signifiant que le masque ne correspond probablement pas aux marquages de la lentille (et donc que le type de la lentille n'est pas référencé dans le registre), le programme peut en avertir l'opticien par l'intermédiaire de l'écran de visualisation 105.

Quoi qu'il en soit, l'écran de visualisation 105 affiche l'image acquise 20 et le masque 30 superposé l'un avec l'autre. Ainsi, l'opticien peut vérifier visuellement si le masque 30 correspond aux marquages 11, 12, 13, 14, 15 de la lentille ophtalmique 10.

Le procédé de détection comporte une troisième étape de détermination des positions des points remarquables CO, VP, VL. Plus précisément, les marquages du masque 30 de l'enregistrement sélectionné étant parfaitement superposés aux images 21, 22, 23, 24, 25 des marquages non effacés de la lentille ophtalmique 10, le programme lit dans le registre les données représentatives des positions des points remarquables CO, VP,VL par rapport aux positions des marquages provisoires du masque 30.

Il détermine ainsi la position des points remarquables de la lentille ophtalmique 10.

Selon une première variante de réalisation du procédé de détection, le programme peut lire les enregistrements du registre les uns après les autres en déterminant à chaque fois le niveau de corrélation réel, c'est-à-dire affiné, des marquages du masque de l'enregistrement lu. Ainsi, dès qu'il détecte un niveau de corrélation supérieur à une valeur seuil prédéterminée, il arrête la lecture du registre et affiche sur l'écran de visualisation 105 le masque 30 de l'enregistrement sélectionné superposé avec l'image acquise 20. L'opticien choisit alors de continuer la lecture du registre si le masque ne convient pas, ou de sélectionner le masque s'il se superpose parfaitement aux marquages de la lentille ophtalmique 10. Il est alors possible d'optimiser la durée du calcul en classant les types référencés de lentilles ophtalmiques selon leur probabilité d'occurrence. Ce classement peut être personnalisé en adaptant ce classement à l'activité effective de l'opticien. On pourra typiquement classer au début du registre les types de lentilles le plus couramment utilisés.Selon une deuxième variante de réalisation du procédé de détection, le programme peut affiner la détection de la position des points remarquables de la lentille en se référant à ses marquages permanents 16, 17. Pour ce faire, il est nécessaire que le dispositif centreur-bloqueur 100 soit équipé de moyens de projection d'image permettant de faire apparaître sur l'image acquise 20 les marquages permanents de la lentille.

La sélection de l'enregistrement correspondant reste identique à celle décrite précédemment. La position détectée de l'ensemble des marquages provisoires de la lentille ophtalmique 10 permet alors de déterminer des zones de recherche dans lesquelles se trouvent les marquages permanents 16, 17. Ces zones peuvent par exemple être constituées par des disques d'un millimètre de diamètre ayant pour centre les positions, approximées à l'aide des marquages provisoires, des points remarquables de la lentille.

Le système électronique et informatique du centreur-bloqueur peut alors analyser l'image acquise 20 dans ces zones de recherche afin de déterminer les positions des marquages permanents de la lentille. Une fois ces positions connues, le programme peut en déduire avec précision les positions des points remarquables CO, VP, VL de la lentille.

## Revendications

1. Procédé mis en œuvre par ordinateur de détection de la position d'au moins un point remarquable recherché (VL, VP, CO) d'une lentille ophtalmique (10) pourvue de marquages provisoires (11, 12, 13, 14, 15) matérialisant des points remarquables (VL, VP, CO) de cette lentille, **caractérisé en ce qu'**il comprend :
- une étape d'acquisition d'une image (20) des marquages provisoires (11, 12, 13, 14, 15) de la lentille ophtalmique (10),
- une étape de lecture d'un registre dont chaque enregistrement comprend des données représentatives de l'agencement des marquages provisoires (31, 32, 33, 34, 35) d'un type référencé de lentilles ophtalmiques, avec la recherche d'un enregistrement correspondant dont l'agencement des marquages provisoires (31, 32, 33, 34, 35) correspond, avec un certain niveau de correspondance, à l'agencement d'une partie au moins des marquages provisoires (11, 12, 13, 14, 15) de la lentille ophtalmique (10) dont l'image (20) a été acquise; et
- une étape de détermination de la position dudit au moins un point remarquable recherché (VL, VP, CO) en fonction de la mise en correspondance des marquages provisoires (11, 12, 13, 14, 15) de la lentille ophtalmique (10) et des données représentatives de l'agencement des marquages provisoires (31, 32, 33, 34, 35) du type référencé de lentilles ophtalmiques de l'enregistrement correspondant, et
**en ce que**, pour rechercher l'enregistrement correspondant, on détermine, pour chaque enregistrement lu du registre, un niveau de correspondance entre l'agencement des marquages provisoires (31, 32, 33, 34, 35) de cet enregistrement lu et l'agencement de tous les marquages provisoires (11, 12, 13, 14, 15) de la lentille ophtalmique (10) dont l'image (20) a été acquise.

2. Procédé de détection selon la revendication précédente, dans lequel, pour rechercher l'enregistrement correspondant, on sélectionne l'enregistrement pour lequel le niveau de correspondance est le plus élevé.

3. Procédé de détection selon la revendication précédente, dans lequel, pour rechercher l'enregistrement correspondant, on fait correspondre un nombre restreint de données représentatives de l'agencement des marquages provisoires (31, 32, 33, 34, 35) de chaque enregistrement avec les marquages provisoires (11, 12, 13, 14, 15) de la lentille ophtalmique (10), on en déduit un ensemble d'enregistrements dont l'agencement des marquages provisoires (31, 32, 33, 34, 35) correspondent aux marquages provisoires (11, 12, 13, 14, 15) de la lentille ophtalmique (10) avec un niveau de correspondance probant, puis on fait correspondre au mieux l'ensemble des données représentatives de l'agencement des marquages provisoires (31, 32, 33, 34, 35) de chaque enregistrement dudit ensemble d'enregistrements avec les marquages provisoires (11, 12, 13, 14, 15) de la lentille ophtalmique (10) pour en déduire l'enregistrement pour lequel le niveau de correspondance est le plus élevé.

4. Procédé de détection selon la revendication 1, dans lequel, pour rechercher l'enregistrement correspondant, on sélectionne l'enregistrement pour lequel le niveau de correspondance est supérieur à un seuil prédéfini.

5. Procédé de détection selon l'une des revendications précédentes, dans lequel le niveau de correspondance entre l'agencement des marquages provisoires (31, 32, 33, 34, 35) du masque (30) de l'enregistrement lu du registre et l'agencement des marquages provisoires (11, 12, 13, 14, 15) de la lentille ophtalmique (10) dont l'image (20) a été acquise est déduit en fonction de la correspondance entre la position de tout ou partie des marquages provisoires (31, 32, 33, 34, 35) du masque (30) et la position de tout ou partie des marquages provisoires (11, 12, 13, 14, 15) de la lentille ophtalmique (10) dont l'image (20) a été acquise.

6. Procédé de détection selon l'une des revendications précédentes, dans lequel le niveau de correspondance entre l'agencement des marquages provisoires (31, 32, 33, 34, 35) du masque (30) de l'enregistrement lu du registre et l'agencement des marquages provisoires (11, 12, 13, 14, 15) de la lentille ophtalmique (10) dont l'image (20) a été acquise est déduit en fonction de la correspondance entre la forme de tout ou partie des marquages provisoires (31, 32, 33, 34, 35) du masque (30) et la forme de tout ou partie des marquages provisoires (11, 12, 13, 14, 15) de la lentille ophtalmique (10) dont l'image (20) a été acquise.

7. Procédé de détection selon l'une des revendications précédentes, dans lequel lesdites données représentatives de l'agencement des marquages provisoires (31, 32, 33, 34, 35) de chaque enregistrement du registre comportent un masque (30) pourvu desdits marquages provisoires (31, 32, 33, 34, 35), et dans lequel, pour calculer ledit niveau de correspondance :
- on superpose le masque (30) de chaque enregistrement successivement lu du registre avec l'image acquise (20) des marquages provisoires (11, 12, 13, 14, 15) de la lentille ophtalmique (10),
- on fait coïncider au mieux l'ensemble des marquages provisoires (31, 32, 33, 34, 35) du masque (30) avec l'ensemble des marquages provisoires (21, 22, 23, 24, 25) de l'image acquise (20), et
- on calcule le niveau de correspondance entre l'agencement des marquages provisoires (31, 32, 33, 34, 35) du masque (30) de l'enregistrement lu du registre et l'agencement des marquages provisoires (21, 22, 23, 24, 25) de l'image acquise (20) de la lentille ophtalmique (10).

8. Procédé de détection selon la revendication précédente, dans lequel le niveau de correspondance calculé est un niveau de corrélation entre l'agencement des marquages provisoires (31, 32, 33, 34, 35) du masque (30) de l'enregistrement lu du registre et l'agencement des marquages provisoires (21, 22, 23, 24, 25) de l'image acquise (20) de la lentille ophtalmique (10).

9. Procédé de détection selon l'une des deux revendications précédentes, dans lequel, pour faire coïncider l'ensemble des marquages provisoires (31, 32, 33, 34, 35) du masque (30) avec l'ensemble des marquages provisoires (21, 22, 23, 24, 25) de l'image acquise (20), on translate et on fait pivoter dans le plan de l'image acquise (20) le masque (30) relativement à l'image acquise (20) pour qu'il prenne différentes positions (X, Y, TETA).

10. Procédé de détection selon l'une des revendications précédentes, dans lequel on acquiert l'image (20) de la lentille ophtalmique (10) de manière à faire apparaître des micro-gravures (16, 17) de la lentille ophtalmique (1), on détermine la position de zones de recherche des micro-gravures (16, 17) en fonction de la mise en correspondance des marquages provisoires (11, 12, 13, 14, 15) de la lentille ophtalmique (10) et des données représentatives de l'agencement des marquages provisoires (31, 32, 33, 34, 35) du type référencé de lentilles ophtalmiques de l'enregistrement correspondant, et on détermine la position dudit au moins un point remarquable recherché (VP, VL, CO) en recherchant les positions desdites micro-gravures (16, 17) dans lesdites zones de recherche.

11. Procédé de détection selon l'une des revendications précédentes, dans lequel l'acquisition de l'image (20) de la lentille ophtalmique (10) comporte une étape de prise d'une image brute de la lentille ophtalmique (10), une étape de binarisation de l'image brute de la lentille ophtalmique (10), et une étape de compensation des effets optiques induits par la lentille ophtalmique (10).

12. Procédé de détection selon l'une des revendications précédentes, dans lequel l'étape de détermination est réalisée par lecture, dans l'enregistrement correspondant du registre, de données représentatives de l'agencement des points remarquables (VL, VP, CO) du type référencé de lentilles ophtalmiques par rapport à l'agencement des marquages provisoires (31, 32, 33, 34, 35).

13. Procédé de détection selon l'une des revendications précédentes, dans lequel, si aucun enregistrement présentant une correspondance suffisante n'est trouvé, le registre est mis à jour au moyen des étapes suivantes :
- création d'un nouvel enregistrement du registre,
- acquisition d'une image de la lentille et mémorisation de cette image dans le nouvel enregistrement,
- saisie de l'agencement des points remarquables de la lentille et mémorisation de cet agencement dans le nouvel enregistrement.

14. Procédé de détection selon l'une des revendications précédentes, dans lequel le registre comporte de plus des données représentatives d'au moins l'une des informations suivantes :
- le nom du fabriquant ou distributeur du type référencé de lentille,
- la référence ou marque de commerce du type référencé de lentille,
- la catégorie, unifocale, multifocale à pastille ou multifocale à variation progressive de puissance du type référencé de lentille,
- l'oeil, gauche ou droit, auquel est destinée le type référencé de lentille.

## Patentansprüche

1. Computerimplementiertes Verfahren zur Erkennung der Position mindestens eines gesuchten Kennpunkts (VL, VP, CO) einer ophthalmischen Linse (10), die mit provisorischen Markierungen (11, 12, 13, 14, 15) versehen ist, die Kennpunkte (VL, VP, CO) dieser Linse bilden, **dadurch gekennzeichnet, dass** es enthält:
- einen Schritt der Erfassung eines Bilds (20) der provisorische Markierungen (11, 12, 13, 14, 15) der ophthalmischen Linse (10),
- einen Schritt des Lesens eines Registers, von dem jede Eintragung für die Anordnung der provisorischen Markierungen (31, 32, 33, 34, 35) eines referenzierten Typs ophthalmischer Linsen repräsentative Daten enthält, mit der Suche einer entsprechenden Eintragung, deren Anordnung der provisorischen Markierungen (31, 32, 33, 34, 35) mit einem bestimmten Entsprechungsgrad der Anordnung mindestens eines Teils der provisorischen Markierungen (11, 12, 13, 14, 15) der ophthalmischen Linse (10) entspricht, deren Bild (20) erfasst wurde; und
- einen Schritt der Bestimmung der Position des mindestens einen gesuchten Kennpunkts (VL, VP, CO) abhängig von der Entsprechung der provisorischen Markierungen (11, 12, 13, 14, 15) der ophthalmischen Linse (10) und der für die Anordnung der provisorischen Markierungen (31, 32, 33, 34, 35) des referenzierten Typs ophthalmischer Linsen der entsprechenden Eintragung repräsentativen Daten, und
dass zur Suche der entsprechenden Eintragung für jede gelesene Eintragung des Registers ein Entsprechungsgrad zwischen der Anordnung der provisorischen Markierungen (31, 32, 33, 34, 35) dieser gelesenen Eintragung und der Anordnung aller provisorischen Markierungen (11, 12, 13, 14, 15) der ophthalmischen Linse (10) bestimmt wird, deren Bild (20) erfasst wurde.

2. Erkennungsverfahren nach dem vorhergehenden Anspruch, wobei, um die entsprechende Eintragung zu suchen, die Eintragung ausgewählt wird, für die der Entsprechungsgrad am höchsten ist.

3. Erkennungsverfahren nach dem vorhergehenden Anspruch, wobei, um die entsprechende Eintragung zu suchen, eine begrenzte Anzahl von für die Anordnung der provisorischen Markierungen (31, 32, 33, 34, 35) jeder Eintragung repräsentativen Daten mit den provisorischen Markierungen (11, 12, 13, 14, 15) der ophthalmischen Linse (10) in Entsprechung gebracht wird, daraus eine Gruppe von Eintragungen abgeleitet wird, deren Anordnung der provisorischen Markierungen (31, 32, 33, 34, 35) den provisorischen Markierungen (11, 12, 13, 14, 15) der ophthalmischen Linse (10) mit einem aussagekräftigen Entsprechungsgrad entspricht, dann die Gruppe der für die Anordnung der provisorischen Markierungen (31, 32, 33, 34, 35) jeder Eintragung der Gruppe von Eintragungen repräsentativen Daten so gut wie möglich mit den provisorischen Markierungen (11, 12, 13, 14, 15) der ophthalmischen Linse (10) in Entsprechung gebracht wird, um daraus die Eintragung abzuleiten, für die der Entsprechungsgrad am höchsten ist.

4. Erkennungsverfahren nach Anspruch 1, wobei zur Suche der entsprechenden Eintragung die Eintragung ausgewählt wird, für die der Entsprechungsgrad höher als eine vordefinierte Schwelle ist.

5. Erkennungsverfahren nach einem der vorhergehenden Ansprüche, wobei der Entsprechungsgrad zwischen der Anordnung der provisorischen Markierungen (31, 32, 33, 34, 35) der Maske (30) der gelesenen Eintragung des Registers und der Anordnung der provisorischen Markierungen (11, 12, 13, 14, 15) der ophthalmischen Linse (10), deren Bild (20) erfasst wurde, abhängig von der Entsprechung zwischen der Position aller oder eines Teils der provisorischen Markierungen (31, 32, 33, 34, 35) der Maske (30) und der Position aller oder eines Teils der provisorischen Markierungen (11, 12, 13, 14, 15) der ophthalmischen Linse (10) abgeleitet wird, deren Bild (20) erfasst wurde.

6. Erkennungsverfahren nach einem der vorhergehenden Ansprüche, wobei der Entsprechungsgrad zwischen der Anordnung der provisorischen Markierungen (31, 32, 33, 34, 35) der Maske (30) der gelesenen Eintragung des Registers und der Anordnung der provisorischen Markierungen (11, 12, 13, 14, 15) der ophthalmischen Linse (10), deren Bild (20) erfasst wurde, abhängig von der Entsprechung zwischen der Form aller oder eines Teils der provisorischen Markierungen (31, 32, 33, 34, 35) der Maske (30) und der Form aller oder eines Teils der provisorischen Markierungen (11, 12, 13, 14, 15) der ophthalmischen Linse (10) abgeleitet wird, deren Bild (20) erfasst wurde.

7. Erkennungsverfahren nach einem der vorhergehenden Ansprüche, wobei die für die Anordnung der provisorischen Markierungen (31, 32, 33, 34, 35) jeder Eintragung des Registers repräsentativen Daten eine Maske (30) aufweisen, die mit den provisorischen Markierungen (31, 32, 33, 34, 35) versehen ist, und wobei zur Berechnung des Entsprechungsgrads:
- die Maske (30) jeder nacheinander gelesenen Eintragung des Registers mit dem erfassten Bild (20) der provisorischen Markierungen (11, 12, 13, 14, 15) der ophthalmischen Linse (10) überlagert wird,
- die Gruppe der provisorischen Markierungen (31, 32, 33, 34, 35) der Maske (30) mit der Gruppe der provisorischen Markierungen (21, 22, 23, 24, 25) des erfassten Bilds (20) so gut wie möglich in Übereinstimmung gebracht wird, und
- der Entsprechungsgrad zwischen der Anordnung der provisorischen Markierungen (31, 32, 33, 34, 35) der Maske (30) der gelesenen Eintragung des Registers und der Anordnung der provisorischen Markierungen (21, 22, 23, 24, 25) des erfassten Bilds (20) der ophthalmischen Linse (10) berechnet wird.

8. Erkennungsverfahren nach dem vorhergehenden Anspruch, wobei der berechnete Entsprechungsgrad ein Korrelationsgrad zwischen der Anordnung der provisorischen Markierungen (31, 32, 33, 34, 35) der Maske (30) der gelesenen Eintragung des Registers und der Anordnung der provisorischen Markierungen (21, 22, 23, 24, 25) des erfassten Bilds (20) der ophthalmischen Linse (10) ist.

9. Erkennungsverfahren nach einem der zwei vorhergehenden Ansprüche, wobei, um die Gruppe der provisorischen Markierungen (31, 32, 33, 34, 35) der Maske (30) mit der Gruppe der provisorischen Markierungen (21, 22, 23, 24, 25) des erfassten Bilds (20) in Übereinstimmung zu bringen, die Maske (30) bezüglich des erfassten Bilds (20) translatorisch verschoben und in der Ebene des erfassten Bilds (20) geschwenkt wird, damit sie verschiedene Positionen (X, Y, TETA) einnimmt.

10. Erkennungsverfahren nach einem der vorhergehenden Ansprüche, wobei das Bild (20) der ophthalmischen Linse (10) so erfasst wird, dass Mikrogravuren (16, 17) der ophthalmischen Linse (1) sichtbar werden, die Position von Suchzonen der Mikrogravuren (16, 17) abhängig vom in-Entsprechung-Bringen der provisorischen Markierungen (11, 12, 13, 14, 15) der ophthalmischen Linse (10) und der für die Anordnung der provisorischen Markierungen (31, 32, 33, 34, 35) des referenzierten Typs ophthalmischer Linsen der entsprechenden Eintragung repräsentativen Daten bestimmt wird, und die Position des mindestens einen gesuchten Kennpunkts (VP, VL, CO) bestimmt wird, indem die Positionen der Mikrogravuren (16, 17) in den Suchzonen gesucht werden.

11. Erkennungsverfahren nach einem der vorhergehenden Ansprüche, wobei die Erfassung des Bilds (20) der ophthalmischen Linse (10) einen Schritt der Aufnahme eines Rohbilds der ophthalmischen Linse (10), einen Schritt der Binärisierung des Rohbilds der ophthalmischen Linse (10) und einen Schritt der Kompensation der durch die ophthalmische Linse (10) induzierten optischen Wirkungen aufweist.

12. Erkennungsverfahren nach einem der vorhergehenden Ansprüche, wobei der Bestimmungsschritt durch Lesen, in der entsprechenden Eintragung des Registers, von für die Anordnung der Kennpunkte (VL, VP, CO) des referenzierten Typs ophthalmischer Linsen bezüglich der Anordnung der provisorischen Markierungen (31, 32, 33, 34, 35) repräsentativen Daten durchgeführt wird.

13. Erkennungsverfahren nach einem der vorhergehenden Ansprüche, wobei, wenn keine eine ausreichende Entsprechung aufweisende Eintragung gefunden wird, das Register mittels der folgenden Schritte aktualisiert wird:
- Erzeugung einer neuen Eintragung des Registers,
- Erfassung eines Bilds der Linse und Speichern dieses Bilds in der neuen Eintragung,
- Eingabe der Anordnung der Kennpunkte der Linse und Speichern dieser Anordnung in der neuen Eintragung.

14. Erkennungsverfahren nach einem der vorhergehenden Ansprüche, wobei das Register zusätzlich Daten aufweist, die für mindestens eine der folgenden Informationen repräsentativ sind:
- der Name des Herstellers oder Händlers des referenzierten Linsentyps,
- die Referenz oder Handelsmarke des referenzierten Linsentyps,
- die Kategorie, unifokal, multifokal mit Chip oder multifokal mit progressiver Stärkenänderung, des referenzierten Linsentyps,
- das linke oder rechte Auge, für das der referenzierte Linsentyp bestimmt ist.

## Claims

1. Computer-implemented method for detecting the position of at least one sought notable point (VL, VP, CO) of an ophthalmic lens (10) provided with temporary markings (11, 12, 13, 14, 15) that indicate notable points (VL, VP, CO) of this lens, **characterized in that** it comprises:
- a step of acquiring an image (20) of the temporary markings (11, 12, 13, 14, 15) of the ophthalmic lens (10),
- a step of reading a register each record of which comprises data representative of the arrangement of the temporary markings (31, 32, 33, 34, 35) of a referenced type of ophthalmic lenses, to find a corresponding record the arrangement of the temporary markings (31, 32, 33, 34, 35) of which corresponds, with a certain level of correspondence, to the arrangement of some at least of the temporary markings (11, 12, 13, 14, 15) of the ophthalmic lens (10) the image (20) of which was acquired; and
- a step of determining the position of said at least one sought notable point (VL, VP, CO) depending on the match between the temporary markings (11, 12, 13, 14, 15) of the ophthalmic lens (10) and the data representative of the arrangement of the temporary markings (31, 32, 33, 34, 35) of the referenced type of ophthalmic lenses of the corresponding record, and
**in that**, to find the corresponding record, for each read record of the register, a level of correspondence between the arrangement of the temporary markings (31, 32, 33, 34, 35) of this read record and the arrangement of all the temporary markings (11, 12, 13, 14, 15) of the ophthalmic lens (10) the image (20) of which was acquired is determined.

2. Detecting method according to the preceding claim, wherein, to find the corresponding record, the record for which the level of correspondence is highest is selected.

3. Detecting method according to the preceding claim, wherein, to find the corresponding record, a restricted number of data representative of the arrangement of the temporary markings (31, 32, 33, 34, 35) of each record are made to correspond with the temporary markings (11, 12, 13, 14, 15) of the ophthalmic lens (10), and a set of records the arrangement of the temporary markings (31, 32, 33, 34, 35) of which corresponds to the temporary markings (11, 12, 13, 14, 15) of the ophthalmic lens (10) with a convincing level of correspondence is deduced therefrom, then all of the data representative of the arrangement of the temporary markings (31, 32, 33, 34, 35) of each record of said set of records are made to correspond with the temporary markings (11, 12, 13, 14, 15) of the ophthalmic lens (10) in order to deduce therefrom the record for which the level of correspondence is highest.

4. Detecting method according to Claim 1, wherein, to find the corresponding record, the record for which the level of correspondence is higher than a predefined threshold is selected.

5. Detecting method according to one of the preceding claims, wherein the level of correspondence between the arrangement of the temporary markings (31, 32, 33, 34, 35) of the mask (30) of the read record of the register and the arrangement of the temporary markings (11, 12, 13, 14, 15) of the ophthalmic lens (10) the image (20) of which was acquired is deduced depending on the correspondence between the position of all or some of the temporary markings (31, 32, 33, 34, 35) of the mask (30) and the position of all or some of the temporary markings (11, 12, 13, 14, 15) of the ophthalmic lens (10) the image (20) of which was acquired.

6. Detecting method according to any one of the preceding claims, wherein the level of correspondence between the arrangement of the temporary markings (31, 32, 33, 34, 35) of the mask (30) of the read record of the register and the arrangement of the temporary markings (11, 12, 13, 14, 15) of the ophthalmic lens (10) the image (20) of which was acquired is deduced depending on the correspondence between the shape of all or some of the temporary markings (31, 32, 33, 34, 35) of the mask (30) and the shape of all or some of the temporary markings (11, 12, 13, 14, 15) of the ophthalmic lens (10) the image (20) of which was acquired.

7. Detecting method according to one of the preceding claims, wherein said data representative of the arrangement of the temporary markings (31, 32, 33, 34, 35) of each record of the register comprise a mask (30) provided with said temporary markings (31, 32, 33, 34, 35), and wherein, to compute said level of correspondence:
- the mask (30) of each successively read record of the register is superposed with the acquired image (20) of the temporary markings (11, 12, 13, 14, 15) of the ophthalmic lens (10),
- all of the temporary markings (31, 32, 33, 34, 35) of the mask (30) are made to coincide as best as possible with all of the temporary markings (21, 22, 23, 24, 25) of the acquired image (20), and
- the level of correspondence between the arrangement of the temporary markings (31, 32, 33, 34, 35) of the mask (30) of the read record of the register and the arrangement of the temporary markings (21, 22, 23, 24, 25) of the acquired image (20) of the ophthalmic lens (10) is computed.

8. Detecting method according to the preceding claim, wherein the computed level of correspondence is a level of correlation between the arrangement of the temporary markings (31, 32, 33, 34, 35) of the mask (30) of the read record of the register and the arrangement of the temporary markings (21, 22, 23, 24, 25) of the acquired image (20) of the ophthalmic lens (10).

9. Detecting method according to one of the two preceding claims, wherein, to make all of the temporary markings (31, 32, 33, 34, 35) of the mask (30) coincide with all of the temporary markings (21, 22, 23, 24, 25) of the acquired image (20), the mask (30) is translated and rotated in the plane of the acquired image (20) relatively to the acquired image (20) so that it adopts various positions (X, Y, TETA).

10. Detecting method according to one of the preceding claims, wherein the image (20) of the ophthalmic lens (10) is acquired in such a way that micro-engravings (16, 17) of the ophthalmic lens (1) appear therein, and the position of search regions in which the micro-engravings (16, 17) will be sought are defined depending on the match of the temporary markings (11, 12, 13, 14, 15) of the ophthalmic lens (10) and of the data representative of the arrangement of the temporary markings (31, 32, 33, 34, 35) of the referenced type of ophthalmic lenses of the corresponding record, and the position of said at least one sought notable point (VP, VL, CO) is determined by finding the positions of said micro-engravings (16, 17) in said search regions.

11. Detecting method according to one of the preceding claims, wherein the acquisition of the image (20) of the ophthalmic lens (10) comprises a step of taking a raw image of the ophthalmic lens (10), a step of digitizing the raw image of the ophthalmic lens (10), and a step of compensating for optical effects induced by the ophthalmic lens (10).

12. Detecting method according to one of the preceding claims, wherein the determining step is carried out by reading, from the corresponding record of the register, data representative of the arrangement of the notable points (VP, VL, CO) of the referenced type of ophthalmic lenses with respect to the arrangement of the temporary markings (31, 32, 33, 34, 35).

13. Detecting method according to one of the preceding claims, wherein, if no record having a sufficient correspondence is found, the register is updated by means of the following steps:
- creating a new record of the register,
- acquiring an image of the lens and storing this image in the new record,
- inputting the arrangement of the notable points of the lens and storing this arrangement in the new record.

14. Detecting method according to one of the preceding claims, wherein the register in addition comprises data representative of at least one of the following pieces of information:
- the name of the manufacturer or distributor of the referenced type of lens,
- the reference or trademark of the referenced type of lens,
- the category, i.e. unifocal, segmented multifocal or multifocal with gradual power variation, of the referenced type of lens,
- the, left or right, eye for which the referenced type of lens is intended.
